**Europäisches Patentamt**

**European Patent Office**

**Office européen des brevets**

(11) Veröffentlichungsnummer: **0 235 119**
**A2**

(12) # EUROPÄISCHE PATENTANMELDUNG

(21) Anmeldenummer: **87890025.7**

(22) Anmeldetag: **10.02.87**

(51) Int. Cl.³: **F 25 D 3/10**
**F 25 D 17/00, B 60 H 3/00**
**//A23B7/152**

(30) Priorität: **17.02.86 AT 401/86**

(43) Veröffentlichungstag der Anmeldung:
**02.09.87 Patentblatt 87/36**

(84) Benannte Vertragsstaaten:
**AT BE CH DE ES FR GB GR IT LI NL SE**

(71) Anmelder: **Franz Welz Internationale Transporte GmbH**
**Ernest-Thun-Strasse 8**
**A-5021 Salzburg(AT)**

(72) Erfinder: **Wassibauer, Ròdiger**
**A-5412 Puch 372**
**A-5412 Puch 372(AT)**

(72) Erfinder: **Russ, Werner,**
**Nr. 442**
**A-5101 Bergheim(AT)**

(74) Vertreter: **Wildhack, Helmut et al,**
**Patentanwälte Dipl.-Ing. Dr. H. Collin, Dipl.-Ing. E.**
**Buresch, Dipl.-Ing. Dr. H. Wildhack, Dipl.-Ing. Dr. G.**
**Jellinek Mariahilfer Strasse 50**
**A-1070 Wien(AT)**

(54) Verfahren und Vorrichtung zur Einstellung bzw. Aufrechterhaltung einer gekühlten Atmosphäre in einem Kühlbehälter.

(57) Die Erfindung betrifft ein Verfahren und eine Vorrichtung zur Einstellung bzw. Aufrechterhaltung einer gekühlten, insbesondere an ein eingelagertes Gut angepaßten Atmosphäre in einem Kühlbehälter, insbesondere Kühlcontainer, wobei der Kältebedarf ausschließlich durch die Einspeisung von kaltem $N_2$ aus einem Vorrat von flüssigem $N_2$ gedeckt wird.

Erfindungsgemäß ist vorgesehen, daß die normalerweise unbewegte Atmosphäre in willkürlich vorgegebenen oder durch gemessene Betriebsparameter (T, $CO_2$-Gehalt, $O_2$-Gehalt, Feuchte) bestimmten Zeitabständen für eine vorbestimmte oder durch gemessene Betriebsparameter bestimmte Zeitspanne zwangsweise umgewälzt wird.

Die zeitweilige Umwälzung der Atmosphäre erfolgt mit einem Gebläse, das von einer Regeleinrichtung betätigt wird.

Fig. 1

EP 0 235 119 A2

Die Erfindung betrifft ein Verfahren zur Einstellung bzw. Aufrechterhaltung einer gekühlten, insbesondere an ein eingelagertes Gut angepaßten Atmosphäre in einem Kühlbehälter, insbesondere in einem Kühlcontainer, wobei der Kältebedarf ausschließlich durch die Einspeisung von kaltem Stickstoff aus einem Vorrat von flüssigem Stickstoff (flüssige Luft) gedeckt wird. Des weiteren betrifft die Erfindung einen Kühlbehälter, insbesondere einen Kühlcontainer, der mit zumindest einem Vorratsbehälter für flüssigen Stickstoff (flüssige Luft) ausgerüstet ist, der in das Innere des Kühlbehälters zur Einstellung bzw. Aufrechterhaltung einer insbesondere an ein eingelagertes Gut angepaßten, gekühlten Atmosphäre unter Steuerung einer Regeleinrichtung eingespeist wird und insbesondere zur Durchführung des erwähnten Verfahrens geeignet ist.

Derartige Kühlbehälter dienen zum Transport oder zur Lagerung von Gütern, z.B. Lebensmitteln, Blumen, Waffen, Sprengstoffen usw. Diese Kühlbehälter können z.B. mit LKW, Bahn oder Schiff usw. transportiert werden und die Form von genormten Containern besitzen.

Ziel der Erfindung ist es, ein Verfahren bzw. einen Kühlbehälter der genannten Art derart auszugestalten, daß der Kühlvorgang energiesparend verläuft und der vorgegebene Vorrat an Kühlmitteln möglichst lange aushält; gleichzeitig soll ein optimales Klima in dem Kühlbehälter aufrechterhalten werden, das den darin gelagerten Waren zuträglich ist. Dieses Problem stellt sich insbesondere bei Kühlbehältern, die ein Kälteaggregat aufweisen, welches Nachteile hinsichtlich der Betriebskosten mit sich bringt und andauernd in Betrieb gehalten werden muß. Dadurch entstehen beträchtliche Energiekosten und es entsteht insbesondere bei einer Lagerung des Kühlbehälters eine Verschmutzung und Lärmbelästigung der Umgebung. Deshalb ist es das spezielle Ziel der Erfindung, Kühlbehälter weiterzuentwickeln, bei denen der Kältebedarf ausschließlich aus einem Vorrat von flüssiger Luft bzw. flüssigem Stickstoff gedeckt wird.

Erfindungsgemäß ist ein Verfahren der eingangs genannten Art dadurch gekennzeichnet, daß die normalerweise unbewegte Atmosphäre in willkürlich vorgegebenen oder durch gemessene Betriebsparameter (T, $CO_2$-Gehalt, $O_2$-Gehalt, Feuchte) bestimmten Zeitabständen für vorbestimmte oder durch gemessene Betriebsparameter bestimmte Zeitspannen im Inneren des Behälters zwangsweise umgewälzt wird.

Bei ausschließlich mit flüssigem Stickstoff gekühlten Kühlbehältern wurde bisher eine Umwälzung der Atmosphäre im Inneren des Behälters nicht vorgesehen. Dies hatte zur Folge, daß die Temperaturverteilung unzureichend war und durch eine üblicherweise von oben erfolgende Einspeisung des kalten Stickstoffes die oben gelagerten Waren eine Temperatur weit unter dem 0-Punkt erreichten und Frostschäden auftraten, während die weiter unten gelagerten Waren bzw. die zwischen anderen Waren gelagerten Waren nicht gut von dem kalten Stickstoff erreicht und unzureichend gekühlt wurden; im Inneren des Behälters herrschten an verschiedenen Stellen unterschiedliche Temperaturen. Ferner ist zu berücksichtigen, daß ein andauernd laufendes Gebläse zur Luftumwälzung beträchtliche Energie benötigt, so daß eben erfindungsgemäß als optimale Lösung vorgesehen ist, eine Umwälzung der Atmosphäre nur in willkürlich vorgegebenen Zeitabständen und nur für bestimmte Zeitspannen vorzusehen. Es hat sich in der Praxis erwiesen, daß durch eine derartige Vorgangsweise über den Großteil der Kühlzeit das Gebläse nicht eingeschaltet werden muß und trotzdem eine ausreichende gleichmäßige Kälteverteilung im Container erreicht wird.

Zum anfänglichen Abkühlen des Gutes im Container ist in der Praxis ein Einführen von kaltem Stickstoff über die Dauer von etwa 5 Minuten erforderlich, worauf ein Umwälzen von 15 Minuten vorgenommen wurde. Nach der Umwälzung wird gegebenenfalls nochmal kalter Stickstoff zugeführt und sodann wiederum umgewälzt, worauf in der Regel die gewünschte Lagertemperatur erreicht war. Im Regelfall, d.h., wenn der Kühlcontainer seine Kühltemperatur erreicht hatte, war ein $N_2$-Einleiten in der Dauer von etwa bis zu einer Minute nur etwa jede Stunde notwendig, wobei diesem Einleiten ein Umwälzen von etwa 5 Minuten Dauer folgte.

Es zeigte sich in überraschender Weise, daß ein kurzzeitiges Umwälzen eine rasche Vergleichmäßigung der Temperatur und auch der Feuchtigkeit sowie der anderen Parameter der Atmosphäre im Inneren des Kühlcontainers erreichen ließ.

Als vorteilhaft hat es sich ferner erwiesen, wenn die Atmosphäre während des Umwälzens befeuchtet wird. Diese zeitweise erfolgende und in Abhängigkeit von Meßwerten der relativen Luftfeuchte gesteuerte Befeuchtung während des Umwälzens hat sich als ausreichend erwiesen, um eine optimale Luftfeuchtigkeit im Inneren des Containers aufrecht zu erhalten, die vor allem z.B. beim Transport von Früchten, Salat, Gemüse, Fleisch u.s.w. notwendig ist. Anderseits wieder würde eine Oberdosierung der Feuchtigkeit unnötig Energie und mitgeführtes Wasser verschwenden.

Erfindungsgemäß ist jedoch vorgesehen, daß, insbesondere vor und/ oder während der anfänglichen Abkühlung der Atmosphäre zu Kühlbeginn, der gemessene Feuchte-Istwert der relativen Luftfeuchtigkeit in der Atmosphäre mit einem Feuchte-Sollwert verglichen wird und bei Unterschreiten des Feuchte-Sollwertes eine Befeuchtung der Atmosphäre erfolgt, wobei eine bzw. eine weitere Abkühlung der Atmosphäre so lange unterbleibt bzw. ausgesetzt wird, bis der Feuchte-Sollwert erreicht wird.

Es hat sich erwiesen, daß es besonders wichtig ist, vor einer Abkühlung der Atmosphäre im Kühlcontainer die Feuchte-Istwerte zu messen und zu berücksichtigen. Liegen diese Feuchte-Istwerte unterhalb eines bestimmten Grenzwertes, kann, wenn eine Abkühlung vorgenommen wird, der Feuchte-Istwert im Container nicht mehr auf das gewünschte Niveau eingeregelt bzw.erhöht werden und eingelagerte Früchte trocknen aus bzw. Verpackungen aus wasseraufnehmendem Material werden feucht. Es ist somit für einen ordnungsgemäßen Betrieb besonders wichtig, die Feuchte-Istwerte im Container vor der Abkühlung auf einen bestimmten Istwert einzustellen, was im Zuge der Befeuchtung während eines anfänglichen Umwälzens erfolgen kann.

Vor der ersten bzw. anfänglichen Abkühlung erfolgt somit eine Umwälzung und gegebenenfalls eine Befeuchtung in Abhängigkeit von den Feuchte-Istwerten. Wenn der Behälterinhalt bzw. die Atmosphäre abgekühlt ist, erfolgt die Umwälzung der Atmosphäre in erster Linie in Abhängigkeit vom Temperatur-Istwert.

Zur Vergleichmäßigung der Temperatur, der Feuchte, des $CO_2$-Gehaltes, des $O_2$-Gehaltes u.s.w. in der Atmosphäre des Containers ist es sinnvoll, daß bevor und/oder während diese Parameter gemessen werden sollen, die Atmosphäre vor der Messung für kurz Zeit umgewälzt wird.

Eine Regelung der Atmosphäre kann derart erfolgen, daß der $O_2$-Gehalt der Atmosphäre gegebenenfalls kontinuierlich gemessen wird, und daß bei $O_2$-Mangel bei andauernder Umwälzung Außenluft eingeführt wird bzw. bei $O_2$-Überschuß eine zusätzliche, jedoch von der Einspeisung des kalten $N_2$ gesonderte $N_2$-Verdampfung entweder im Behälter oder außerhalb des Behälters mit entsprechender Einleitung in den Behälter vorgenommen wird. Bevorzugt ist es dabei, wenn die Umwälzung der Atmosphäre in Abhängigkeit vom Temperatur-Istwert der Atmosphäre gesteuert bzw. eingeleitet wird.

Als vorteilhaft hat es sich erwiesen, wenn während des Einleitens von kaltem Stickstoff ein Umwälzen der Atmosphäre unterbleibt; der auf das eingelagerte Gut treffende kalte Stickstoff kann dieses gut abkühlen und das danach eingeleitete Umwälzen sorgt für eine gleichmäßige Kälteverteilung.

Zur Kontrolle der Lagerhaltung ist es zweckmäßig, wenn die herrschenden Betriebsparameter und die eingestellten Betriebswerte der mechanischen und elektrischen Anlagen gegebenenfalls laufend aufgezeichnet und/oder gespeichert werden.

Ein erfindungsgemäßer Kühlbehälter der eingangs genannten Art ist dadurch gekennzeichnet, daß zur Kälteerzeugung ausschließlich der im Vorratsbehälter gespeicherte flüssige $N_2$ vorgesehen ist und daß zur im Inneren des Behälters erfolgenden Umwälzung der Atmosphäre ein im Normalfall abgeschaltetes Gebläse vorgesehen ist, das von der Regeleinrichtung in willkürlich bestimmten oder von bestimmten Parameterwerten, insbesondere der Temperatur und/oder der Feuchtigkeit (relativen Luftfeuchte) abhängigen Zeitabschnitten für eine vorbestimmte oder von den Parameterwerten abhängige Laufzeitdauer einschaltbar ist.

Das Gebläse und seine Regeleinrichtung, mit der das Gebläse entweder willkürlich oder in von bestimmten Parameterwerten der Atmosphäre abhängigen Zeitabständen bzw. Laufzeiten einschaltbar ist, ermöglichen eine beträchtliche Energieeinsparung bei optimaler, gleichmäßiger Temperaturverteilung im Inneren des Kühlbehälters.

Vorteilhaft ist es, wenn eine von der Regeleinrichtung gesteuerte Feuchtigkeitseinbringeinrichtung, z.B. ein mechanischer $H_2O$-Zerstäuber, im Umwälzkreislauf, insbesondere dem Gebläse nachgeordnet bzw. in dessen Ausblasekanal, vorgesehen ist. Auch andere Arten von Einrichtungen, z.B. Injektoren, Sprühgeräte, flächige Verdunster (z.B. poröse Substanzen bzw. Schwämme) über die die Atmosphäre streicht, Verdampfer usw. sind verwendbar.

Mit einer in diesem Bereich angeordneten Feuchtigkeitseinbringeinrichtung ist eine gleichmäßige Befeuchtung der Atmosphäre im Zuge des Umwälzens einfach möglich.

Erfindungsgemäß ist ferner vorgesehen, daß insbesondere vor dem Gebläse, z.B. im Ansaugkanal, eine Meßeinrichtung für die Temperatur und/oder den Feuchtigkeitsgehalt der Atmosphäre und/oder den $CO_2$-Gehalt und/oder den $O_2$-Gehalt vorgesehen ist. Mit einer in diesem Bereich angeordneten Meßeinrichtung können im Zuge des Umwälzens die entsprechenden Parameter der Atmosphäre genau gemessen werden und entsprechende Regelvorgänge vorgenommen werden. Wie bereits erwähnt ist es vorteilhaft, wenn vor dem Beginn der Messung bereits ein kurzes Umwälzen der Atmosphäre erfolgt ist, so daß eine vergleichmäßigte Atmosphäre über die Meßeinrichtung geführt wird. Bevorzugt ist es, wenn das Gebläse in Abhängigkeit der von der Meßeinrichtung gemessenen Parameter, insbesondere der Temperatur, einschaltbar ist.

Insbesondere zur Durchführung der Feuchtigkeitseinregelung bei einem anfänglichen Abkühlen ist es vorteilhaft, wenn die Regeleinrichtung eine Vergleichseinheit umfaßt, der ein Feuchte-Sollwert eingegeben ist, wobei der Vergleichseinheit ein Temperatur-Istwertsignal von der Meßeinrichtung zugeführt ist und wobei das Ausgangssignal der Vergleichseinheit von der Regeleinheit zur Freigabe, zur Verzögerung oder zur Absperrung der Zufuhr von kaltem $N_2$ in die Atmosphäre dient. Damit ist es möglich, auch wenn der anfängliche Feuchte-Istwert relativ niedrig ist, die im Betrieb zumeist erwünschte hohe relative Luftfeuchtigkeit zu erhalten.

Bevorzugt ist es ferner, wenn eine an den Vorratsbehälter angeschlossene, vorzugsweise im Inneren des Behälters gelegene $N_2$-Vergasungseinrichtung vorgesehen ist, die bei Feststellung eines $O_2$-Überschusses in der Atmosphäre einschaltbar ist und vorzugsweise im Bereich des Gebläses jedoch möglichst entfernt von eingelagertem Gut, insbesondere im Bereich der Endwandfläche des Kühlbehälters angeordnet ist. Ein Einströmen von kaltem Stickstoff in der zur Kühlung üblichen Weise würde die Temperatur in dem Behälter bzw. des eingelagerten Gutes in unerwünschter Weise bzw. zu rasch beeinflussen. Aus diesem Grund ist eine eigene Verdampfungs- bzw. Vergasungseinrichtung für den flüssigen Stickstoff vorgesehen, aus der der Stickstoff in einem Bereich austritt, der möglichst weit vom eingelagerten Gut entfernt ist, um die Atmosphäre bzw. das eingelagerte Gut nur langsam hinsichtlich der Temperatur und Feuchte und der anderen Parameter zu beeinflussen und abzuändern.

Als vorteilhaft hat es sich erwiesen, wenn das Gebläse die Atmosphäre im wesentlichen senkrecht von oben nach unten fördert bzw. der Gebläsekanal im wesentlichen vertikal verläuft und gegebenenfalls im Bodenbereich eine der Atmosphäre auf das Gut gerichtete Umlenkung besitzt. Auf diese Weise wird eine bessere Zirkulation durch das eingelagerte Gut erreicht, das üblicherweise auf Paletten gelagert ist, die auf am Boden befindlichen strömungs- bzw. luftdurchlässigen Trägern aufgesetzt sind.

Vorteilhaft ist es, wenn erfindungsgemäß der Regeleinrichtung eine Aufzeichnungseinrichtung für alle während des Betriebes vorhandenen Parameter und von außen eingestellte Betriebswerte zugeordnet ist. Dabei kann die Aufzeichnungseinrichtung und/oder die Regeleinrichtung von einem Rechner mit Mikroprozessoren und Datenspeichern gebildet sein.

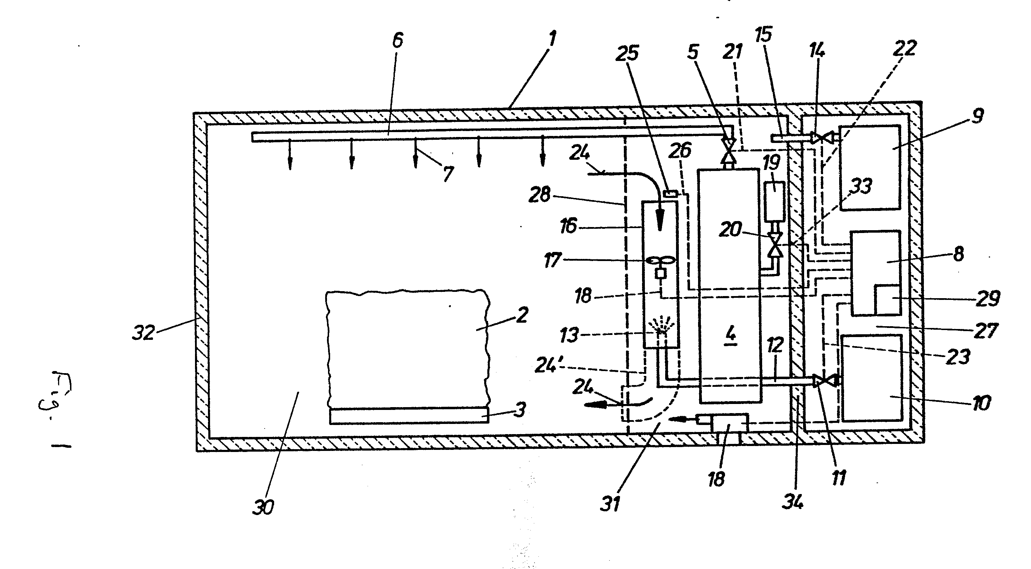

Im folgenden wird die Erfindung anhand eines in der Zeichnung dargestellten Ausführungsbeispieles eines Kühlbehälters beispielsweise näher erläutert:

Die Figur zeigt einen stationären oder verfahrbaren, z.B. als Trailer ausgebildeten Kühlbehälter 1, in dem z.B. auf Paletten 3 eingelagerte Waren 2 gekühlt aufbewahrt und/oder transportiert werden können. Im Inneren des Kühlbehälters, insbesondere an seiner vorderseitigen, Beschickungstüren 32 gegenüberliegenden Stirnwand 34 ist ein Vorratsbehälter 4 zur Aufnahme von flüssigem Stickstoff bzw. flüssiger Luft vorgesehen. Der flüssige Stickstoff wird über eine Leitung 6 mit einem Regelventil 5 in den oberen Bereich oberhalb des eingelagerten Gutes 2 geführt und strömt dort durch Düsen, wie mit den Pfeilen 7 angedeutet, aus, um das eingelagerte Gut 2 bzw. die Atmosphäre im Inneren des Kühlbehälters 1 abzukühlen.

Nahe dem Vorratsbehälter 4 ist ein Gebläse 17 angeordnet, das eine Umwälzung der Atmosphäre im Inneren des Behälters 1 hervorruft, wie mit den Pfeilen 24 angedeutet ist. Dieses Gebläse kann ein von einem Elektromotor betriebener Ventilator sein. Im Bereich des Ansaugkanales 16 des Gebläses 17 ist eine Meßeinrichtung 25 vorgesehen, die auch innerhalb des Ansaugkanales 16 gelegen sein kann; mit dieser Meßeinrichtung sind die Parameter der Atmosphäre, wie Temperatur, Druck, Feuchtigkeit, $CO_2$-Gehalt, $O_2$-Gehalt u.s.w. meßbar.

In den Ausblaskanal 16' des Gebläses 17 mündet eine Einspritzeinrichtung 13, mit der zu gegebenen Zeiten Wasser ausströmbar ist. Das Wasser wird in feinst verstäubter Form in die vorbeiströmende Atmosphäre abgegeben bzw. eingespritzt und von dieser mitgenommen, um einen gewünschten Feuchtigkeitsgehalt in der Atmosphäre herzustellen. Der Einspritzeinrichtung 13 wird das notwendige Wasser über eine Leitung 12 mit einem Regelventil 11 aus einem gegebenenfalls unter Druck stehenden Wasserbehälter 10 zugeführt.

In den Kühlbehälter mündet ferner eine Leitung 15, mit der unter der Steuerung eines Regelventiles 14 aus einem Kohlendioxyd-Behälter 9 $CO_2$ zusätzlich einspeisbar ist.

Dieses $CO_2$ wird zur Einregelung der Atmosphäre verwendet. Wenn es aus einem Speicher für flüssiges $CO_2$ kommt, dient es auch zur Kühlung. In diesem Zusammenhang wird bemerkt, daß der zur Kühlung eingesetzte flüssige Stickstoff durch flüssiges $CO_2$ zur Gänze oder teilweise ersetzbar ist oder daß kalter (flüssiger) $N_2$ gemeinsam mit kaltem (flüssigen) $CO_2$ zur Kühlung in den Behälter eingespeist werden kann. Es ist also möglich, den Kühlbehälter auch nur mit $CO_2$ oder mit $N_2$ und $CO_2$ zu kühlen. In diesem Fall dient der Behälter 4 für die Speicherung des $CO_2$ und der Behälter 9 könnte zur $N_2$-Zufuhr zur Einregelung der Atmosphäre verwendet werden. Die Verwendung von $N_2$ und/oder $CO_2$ hängt von der erforderlichen Atmosphärenzusammensetzung ab. Ansonsten erfolgt die Kühlung bzw. der Kühlverlauf bei $N_2$ und $CO_2$ in gleicher Weise (Unter $N_2$ wird im vorliegenden Fall durchwegs $N_2$ oder technisch hergestellte flüssige Luft verstanden).

Zwischen der Stirnwand 34 und dem Vorratsbehälter 4 ist eine Verdampfungseinrichtung 19 angeordnet, mit der aus dem Vorratsbehälter 4 entnommener Stickstoff verdampfbar ist, um Stickstoffverluste der Atmosphäre ausgleichen zu können. Die Verdampfungseinrichtung 19 kann z.B. auch im Abteil 27 gelegen sein und der verdampfte $N_2$ über eine Leitung in den Behälter eingespeist werden.

Die Einleitung des kalten Stickstoffes aus dem Vorratsbehälter 4 in das Innere des Behälters 1 wird über eine Leitung 21 und das Regelventil 5 von einer Regeleinrichtung 8 gesteuert. Ferner steuert die Regeleinrichtung 8 über eine Leitung 18 den Motor des Gebläses 17. Die Abgabe von zusätzlichem kaltem Stickstoff durch die Verdampfungseinrichtung 19 wird über eine Leitung 33 und ein Regelventil 20 gesteuert. Die Abgabe von Wasser durch die Einspritzeinrichtung 13 wird über die Leitung 23 und das Regelventil 11 gesteuert. Die Regeleinrichtung 8 dient ferner zur Einregelung der $CO_2$-Zufuhr, die über eine Leitung 22 und das Regelventil 14 erfolgt.

Über dies kann die Regeleinrichtung 8 mit einer regelbaren Einrichtung zur Zufuhr von Außenluft z.B. einem Kompressor 18 verbunden sein, mit dem Außenluft in den Behälter 1 einbringbar ist, um eine gewisses $O_2$-Niveau aufrechtzuerhalten. Anstelle von oder zusätzlich zum Kompressor 18 wäre auch der Einsatz eines mitgeführten $O_2$-Speichers möglich, z.B. mit füssigem oder komprimiertem $O_2$, aus dem bei Bedarf $O_2$ in den Behälter, eingespeist wird. Der Regeleinrichtung 8 ist die Meßeinrichtung 25 zugeordnet, die zur Messung der Zusammensetzung der Atmosphäre, z.B. einen $CO_2$-Sensor, $O_2$-Sensor, $N_2$-Sensor, $H_2O$-Sensor, Äthylensensor, Temperatursensor, Drucksensor usw. umfaßt. Die Meßeinrichtung 25 kann vorteilhaft vor dem ansaugseitigen oder vor dem ausblasseitigen Ende 24 des Gebläsekanals angeordnet sein.

Ferner ist eine Aufzeichnungseinrichtung 29 vorgesehen, die insbesondere der Regeleinrichtung 8 zugeordnet ist und mit der sämtliche Betriebsparameter während der Abkühlung bzw. während des Kühlbetriebes aufgezeichnet werden können, um Fehlbedienungen oder Fehler in der Anlage aufzeichnen zu können.

Die Regeleinrichtung 8, der $CO_2$-Behälter 9, der Wasserbehälter 10 und notwendige Stromquellen bzw. Batterien zur Versorgung der elektrischen Einrichtungen sind in einer eigenen Abteilung 27 vorgesehen, die durch die Stirnwand 34 vom Kühlbehälter 1 getrennt ist. Der Vorratsbehälter 4 und das Gebläse 17 sind durch ein Gitter 28 von dem Lagerraum 30 getrennt in einem eigenen Abteil 31 angeordnet, das durch das relativ großmaschige Gitter 28 gegen Beschädigung durch eingelagerte Waren 2 geschützt ist. Vorteilhaft ist es, wenn sich der Vorratsbehälter 4 direkt im Kühlbehälter 1 befindet, da auftretende Kälteverluste des Vorratsbehälters 4 direkt zur Kühlung der Waren bzw. der Atmosphäre verwendet werden kann.

Nach dem Einlagern der Waren 2 wird eine Abkühlung der Atmosphäre dadurch vorgenommen, daß aus dem Vorratsbehälter 4 kalter Stickstoff in den Lagerraum 30 eingespeist wird. Zuvor wird jedoch die Temperatur und insbesondere die Feuchtigkeit der Atmosphäre gemessen. Ergibt sich ein bei der entsprechenden Temperatur zu geringer Feuchtigkeitsgehalt der Atmosphäre so wird die Abkühlung ausgesetzt und es wird im Zuge eines Umwälzens Wasser durch die Einspritzeinrichtung 13 eingesprüht und somit der Feuchtigkeitsgehalt der Atmosphäre erhöht. Wenn der gewünschte Feuchtigkeitswert erreicht wird, wird weiter kalter Stickstoff eingespeist, jedoch die Umwälzung für die Zeitdauer der Stickstoffeinspeisung unterbrochen. Dieser Vorgang kann auch mehrmals vorgenommen werden, bis die gewünschte Lager- bzw. Atmosphärentemperatur erreicht ist. Im Betrieb bzw. nach der Einstellung der gewünschten Kühltemperatur wird das Gebläse 17 nur von Zeit zu Zeit eingeschaltet, wenn sich entweder die Betriebsparameter in bestimmter Weise verändert haben, wenn eine Messung vorgenommen werden soll, um die Atmosphärenparamter zu vergleichmäßigen oder wenn eine Umwälzung willkürlich vorgenommen werden soll.

Selbstverständlich schaltet sich das Gebläse 17 ein, wenn eine bestimmte Temperatur in der Atmosphäre unterschritten wird, um eine Vergleichmäßigung der Atmosphäre zu erreichen und um sodann eine entsprechende Messung der vergleichmäßigten Atmosphäre vornehmen zu können, um dann erforderlichenfalls eine Kühlung durch Stickstoffeinspeisung einleiten zu können.

Es kann ferner ein $O_2$-Sensor in der Meßeinrichtung 25 vorgesehen sein, mit dem der $O_2$-Gehalt insbesondere kontinuierlich gemssen werden kann. Wenn zuviel Sauerstoff beim anfänglichen Abkühlen festgestellt wird, erfolgt eine übliche Abkühlung bis eine entsprechende Kühltemperatur erreicht worden ist. Wird danach oder später im Regelfall, d.h. nach Erreichen der Kühltemperatur, zu wenig Sauerstoff festgestellt, kann

Sauerstoff oder Luft von der Außenseite bzw. der Umgebung zugeführt /z.B.mit dem regelbaren Kompressor 18
werden und die Atmosphäre wird durch Umwälzung vergleichmäßigt. Wenn
jedoch danach noch immer bzw. im Regelfall zuviel Sauerstoff festge= ·
stellt wird, erfolgt eine $N_2$-Vergasung mit der Verdampfungseinrichtung
19 und gegebenenfalls eine Umwälzung.

Als Feuchtigkeitseinspritzeinrichtung 13 können z.B. mechanische
druckbeaufschlagte $H_2O$-Zerstäuber vorgesehen sein, mit denen eine Druckzerstäubung erreicht werden kann.

Die Regeleinheit 8 sorgt für den intermittierenden Betrieb des Gebläses entweder aufgrund eingegebener Daten oder aufgrund der mit der
Meßeinrichtung 25 gemessenen Betriebsparameter. Es hat sich herausgestellt, daß bereits nach einigen Minuten Umwälzung, d.h. nach maximal
5 Minuten Umwälzung eine Vergleichmäßigung der Atmosphäre stattgefunden
hat und die Betriebsparameter in eindeutiger Weise meßbar sind.

Insbesondere im Hinblick auf längerdauernde Einlagerungen von Gut
unter Kühlung und bestimmter Atmosphärenzusammensetzung ist es von Vorteil,
wenn alle Temperaturen, die /Atmosphärenzusammensetzung,  die Luftfeuchtigkeit, die Außentemperaturen und sämtliche weiteren Betriebsparameter in
einer Aufzeichnungseinheit aufgezeichnet und gespeichert werden, um nach
dem Lagerungsende einen ordnungsgemäßen oder fehlerhaften Betrieb während
der Lagerung nachweisen zu können. Unter Verwendung der der
Regeleinrichtung 8 zugeführten Istwerte der Betriebsparameter und der z.B.
von Datenträgern eingespeisten Soll-Daten bzw. von eingespeicherten Daten
kann ein optimales Lagerprogramm gesteuert werden. Um unbefugte Eingriffe
während der Lagerung zu vermeiden, kann vorgesehen sein, daß die Regeleinrichtung 8     zur Feststellung von Eingriffen in das Programm einen
auf ihre Speichereinheit einwirkenden Schlüsselschalter umfaßt. Damit sind
auch während länger dauernder Transporte Eingriffe in den Programmablauf
bzw. Eingaben von Daten in die Regeleinrichtung 8     nachweisbar. Vorteilhafterweise kann noch vorgesehen sein, daß alle, insbesondere auch die
händisch betätigbaren, Ventile, Regler und Stelleinrichtungen u.s.w., mit
Sensoren ausgerüstet sind und daß bei deren händischer Betätigung die Art
und der Zeitpunkt der Betätigung der Aufzeichnungseinrichtung zur
Speicherung übermittelt werden, bzw. daß eine, den Zutritt zur Regeleinrichtung und/oder Aufzeichnungseinrichtung sowie allen weiteren zur Einstellung der Atmosphäre und/oder Temperatur dienenden Einrichtungen verhindernde Verschlußeinrichtung, z.B. Tür, Deckel, u.s.w., vorgesehen ist, deren Öffnung von der Aufzeichnungseinrichtung abtastbar ist und aufgezeichnet wird.

Prinzipiell können sämtliche Funktionen des Kühlbehälters 1, insbesondere die Steuerung der Ventile, das Ein- und Ausschalten sämtlicher elektrischer Einrichtungen, insbesondere des Gebläsemotors, die Einspeisung von Zusatzgasen bzw. der Durchsatz der Atmosphäre durch den Umwälzkreislauf von der Regeleinrichtung 8 gesteuert und vorteilhafterweise überwacht werden. Dazu erhält die Regeleinrichtung 8 die Signale der Meßeinrichtung 25, die einen $O_2$-Sensor, einen $N_2$-Sensor, einen $CO_2$-Sensor, einen Äthylensensor, einen Temperatursensor, einen $H_2O$-Dampfsensor bzw. Feuchtesensor und gegebenenfalls weitere Sensoren, z.B. für weitere Gasbestandteile, Meßwerte der Temperatur des Lagergutes, der Außentemperatur, u.s.w. umfassen kann.

Insbesondere von Vorteil ist es, wenn auch die Außentemperatur und die Temperatur des eingelagerten Gutes über weitere Meßsensoren gemessen werden und das Verhältnis von Raumtemperatur zur Lagerguttemperatur für die Umwälzung bzw. $N_2$-Einspeisung berücksichtigt wird.

Die Regeleinrichtung 8, die sämtliche Regel- und Steuerfunktionen für die Einrichtungen des Kühlbehälters übernimmt, besitzt entsprechende Programm- und Datenspeicher und kann ein Betriebssystem mit Selbstdiagnose besitzen, um dem Betreiber jederzeit die Betriebssituation anzeigen zu können, sowie einen Uhrenbaustein, Regel- und Steuermodule, Schnittstellen zur Bedienungseinheit sowie zu Ausgabeeinheiten bzw. zu übergeordneten Rechnern umfassen. Insbesondere soll eine Datenaufzeichnung bzw. Speicherung des Betriebszustandes über einen längeren Zeitraum, z.B. bis zu 20 Tagen, vorgesehen sein und die hiefür nötigen Speicherkapazitäten. Ferner besitzt die Regeleinrichtung 8 eine gebufferte Notstromversorgung und eine Spannungsüberwachung.

Sämtliche zu überwachenden, zu messenden und zu steuernden Parameter und alle notwendigen Zustandsänderungen und Schaltvorgänge, insbesondere unerlaubte Veränderungen der Betriebsparameter sowie unerlaubte Betätigung werden in Speichereinheiten der Aufzeichnungseinheit 29 gespeichert, um z.B.

Ursachen für eine Verderbnis des gelagerten Gutes, Fehlbedienungen, u.s.w. nachweisen zu können. Ferner werden Speicher eingesetzt, deren Speicherinhalt bei einem Stromausfall nicht verlorengeht und es ist vorgesehen, daß der Speicherinhalt, der die Daten über die gesamte Lagerzeit enthält, nur nach einer Code-Eingabe und/oder nach erfolgtem Ausdruck gelöscht oder überschrieben werden kann. Ferner sind dem Rechner externe Meldeeinrichtungen zugeordnet, die z.B. einen Alarm abgeben, wenn eine Störung erfolgt oder ein Service erforderlich ist.

Der Zutritt zu dem Abteil 27 und/oder 31 kann mit einer von außen zugänglichen Tür od.dgl. derart verschlossen sein, daß jedes Öffnen der Tür in der Aufzeichnungseinrichtung angezeigt wird. Ebenso können sämtliche erlaubterweise händisch betätigbaren Stell- und Regeleinrichtungen von der Aufzeichnungseinrichtung überwacht werden, um die Art und Weise der Betätigung aufzuzeichnen.

Die Dateneingabe in die Regeleinrichtung 8 erfolgt z.B. über einen als Eingabeeinheit Kartenleser oder andere Lesegeräte für Datenträger, z.B. Lochstreifen, Magnetbänder, telefonische Modems, Funkdateneingaben, u.s.w. Als einzuge- und gegebenenfalls zu speichernde bende Daten kommen z.B. in Frage: Gaskonzentrationen, Temperatur, Druck, Feuchte, $O_2$-, $N_2$-, $CO_2$-, $H_2O$-Gehalt, Art des zu lagernden Gutes, voraussichtliche Transportdauer, u.s.w. Entsprechend einem in der Regeleinrichtung 8 gespeicherten Programm und/oder einem für das spezielle Gut speziell einzuspeichernden Programm wird das Steuerungsprogramm erstellt und der Ablauf nach Eingabe eines Startsignales eingeleitet und erfolgt in Abhängigkeit der der Regeleinrichtung 8 während des Betriebes zugeführten Meßsignale.

Üblicherweise muß die Ware nach dem Transport sofort ausgeladen werden. Plötzliche Temperaturanstiege sind jedoch ausgesprochen schädlich, insbesondere wenn es sich um Lebensmittel, z.B. Obst. handelt. Es bildet sich ein Kondenswasserniederschlag und es kommt zu einem Schimmelbefall. Erfindungs- z.B. in einen Speicher gemäß wird demzufolge der Regeleinrichtung/als weiterer Parameter, insbesondere neben der Transportzeit, über die Eingabeeinheit ein Parameter eingegeben, der den Beginn eines langsamen kontinuierlichen oder schrittweisen Ansteigens der Lagerraumtemperatur bewirkt und diese Temperatur an die zu erwartenden Umgebungstemperaturen nach dem Öffnen des Kühlbehälters bzw. nach dem Entladen anpaßt bzw. auf diese einregelt. Die eigentliche Atmosphäre bleibt jedoch während der Temperaturerhöhung bezuglich ihrer Zusammensetzung unverändert bzw. wird weiter optimal eingeregelt (Feuchtigkeit). Die Dauer dieses Temperaturanstieges wird auf etwa 1 - 3 Tage, vorzugsweise 2 Tage, eingeregelt. Bevorzugterweise benützt die Regeleinrichtung eine eigene Schalteinheit, um diesen Temperaturanstieg zu vollziehen. Diese Vorgangsweise bzw. dieses Regelungsverfahren bietet neben einer Qualitätsverbesserung der Waren auch eine beträchtliche Einsparung an Kühlenergie.

Patentansprüche:

1. Verfahren zur Einstellung bzw. Aufrechterhaltung einer gekühlten, insbesondere an ein eingelagertes Gut angepaßten Atmosphäre in einem Kühlbehälter, insbesondere Kühlcontainer, wobei der Kältebedarf ausschließlich durch die Eispeisung von kaltem $N_2$ (flüssige Luft) aus einem Vorrat von flüssigem $N_2$ (flüssiger Luft) gedeckt wird, dadurch gekennzeichnet, daß die normalerweise unbewegte Atmosphäre/in nur willkürlich vorgegebenen oder nur durch gemessene Betriebsparameter (T, $CO_2$-Gehalt, $O_2$-Gehalt, Feuchte) bestimmten Zeitabständen für eine vorbestimmte oder durch gemessene Betriebsparameter bestimmte Zeitspanne innerhalb des Behälters zwangsweise umgewälzt wird.

2. Verfahren nach Anspruch 1, dadurch gekennzeichnet, daß die Atmosphäre während des Umwälzens befeuchtet wird.

3. Verfahren nach Anspruch 1 oder 2, dadurch gekennzeichnet, daß, insbesondere vor und/oder während der anfänglichen Abkühlung der Atmosphäre zu Kühlbeginn, der gemessene Feuchte-Istwert der relativen Luftfeuchtigkeit in der Atmosphäre mit einem Feuchte-Sollwert verglichen wird und bei Unterschreiten des Feuchte-Sollwertes eine Befeuchtung der Atmosphäre erfolgt, wobei eine bzw. eine weitere Abkühlung der Atmosphäre so lange unterbleibt bzw. ausgesetzt wird, bis der Feuchte-Sollwert erreicht wird.

4. Verfahren nach einem der Ansprüche 1 bis 3, dadurch gekenzeichnet, daß vor und/oder während der Messung der Betriebsparameter, z.B. T, $CO_2$-, $O_2$-Gehalt, Feuchte u.s.w., die Atmosphäre umgewälzt wird.

5. Verfahren nach einem der Ansprüche 1 bis 4, dadurch gekennzeichnet, daß der $O_2$-Gehalt der Atmosphäre gegebenenfalls kontinuierlich gemessen wird, und daß bei $O_2$-Mangel bei andauernder Umwälzung Außenluft eingeführt wird bzw. bei $O_2$-Überschuß eine zusätzliche, jedoch von der Einspeisung des kalten $N_2$ gesonderte $N_2$-Verdampfung entweder im Behälter oder außerhalb des Behälters mit entsprechender Einleitung in den Behälter vorgenommen wird.

6. Verfahren nach einem der Ansprüche 1 bis 5, dadurch gekennzeichnet, daß die Umwälzung der Atmosphäre in Abhängigkeit vom Temperatur-Istwert der Atmosphäre gesteuert bzw. eingeleitet wird.

7. Verfahren nach einem der Ansprüche 1 - 6, dadurch gekennzeichnet, daß während des Einspeisens von kaltem $N_2$ ein Umwälzen der Atmosphäre unterbleibt.

*15*

8. Verfahren nach einem der Ansprüche 1 bis 7, dadurch gekennzeichnet, daß die herrschenden Betriebsparameter und die eingestellten Betriebswerte der mechanischen und elektrischen Anlagen gegebenenfalls laufend aufgezeichnet und/oder gespeichert werden.

9. Kühlbehälter, insbesondere Kühlcontainer, der mit zumindest einem Vorratsbehälter für flüssigen Stickstoff (flüssige Luft) ausgerüstet ist, der in das Innere des Kühlbehälters zur Einstellung bzw. Aufrechterhaltung einer insbesondere an ein eingelagertes Gut angepaßten, gekühlten Atmosphäre unter der Steuerung einer Regeleinrichtung eingespeist wird, insbesondere zur Durchführung des Verfahrens nach einem der Ansprüche 1 bis 8, dadurch gekennzeichnet, daß zur Kälteerzeugung ausschließlich der im Vorratsbehälter (4) gespeicherte flüssige $N_2$ (flüssige Luft) vorgesehen ist und daß zur im Inneren des Behälters erfolgenden Umwälzung der Atmospäre ein im Normalfall abgeschaltetes Gebläse (17) vorgesehen ist, das von der Regeleinrichtung (8) in willkürlich bestimmten oder von bestimmten Parameterwerten, insbesondere der Temperatur und/oder der Feuchtigkeit (relativen Luftfeuchte) abhängigen Zeitabständen für eine vorbestimmte oder von den Parameterwerten abhängige Laufzeitdauer einschaltbar ist.

10. Kühlbehälter nach Anspruch 9, dadurch gekennzeichnet, daß eine von der Regeleinrichtung (8) gesteuerte Feuchtigkeitseinbringeinrichtung (10,13), z.B. ein mechanischer $H_2O$-Zerstäuber, im Umwälzkreislauf, insbesondere dem Gebläse (17) nachgeordnet bzw. in dessen Ausblasekanal, vorgesehen ist.

11. Kühlbehälter nach Anspruch 9 oder 10, dadurch gekennzeichnet, daß im Umwälzkreislauf, insbes. vor dem Gebläse (17), z.B. im Ansaugkanal, eine Meßeinrichtung (25) für die Temperatur und/oder den Feuchtigkeitsgehalt der Atmosphäre und/oder den $CO_2$-Gehalt und/oder den $O_2$-Gehalt (und gegebenenfalls weitere Parameter) vorgesehen ist (sind).

12. Kühlbehälter nach einem der Ansprüche 9 bis 11, dadurch gekennzeichnet, daß das Gebläse (17) in Abhängigkeit der von der Meßeinrichtung (25) gemessenen Parameter, insbesondere der Temperatur einschaltbar ist.

13. Kühlbehälter nach einem der Ansprüche 9 bis 12, dadurch gekennzeichnet, daß die Regeleinrichtung (8) eine Vergleichseinheit umfaßt, der

*16*

ein Feuchte-Sollwert eingegeben ist, wobei der Vergleichseinheit ein Temperatur-Istwertsignal von der Meßeinrichtung zugeführt ist und wobei das Ausgangssignal der Vergleichseinheit von der Regeleinheit zur Freigabe, zur Verzögerung oder zur Absperrung der Zufuhr von kaltem $N_2$ in die Atmosphäre dient.

14. Kühlbehälter nach einem der Ansprüche 9 bis 13, dadurch gekennzeichnet, daß eine an den Vorratsbehälter (4) angeschlossene, vorzugsweise im Inneren des Behälters gelegene $N_2$-Vergasungseinrichtung (19) vorgesehen ist, die bei Feststellung eines $O_2$-Oberschusses in der Atmosphäre einschaltbar ist und vorzugsweise im Bereich des Gebläses (17) jedoch möglichst entfernt von eingelagertem Gut (2), insbesondere im Bereich der Endwandfläche des Kühlbehälters (1) angeordnet ist.

15. Kühlbehälter nach einem der Ansprüche 9 bis 14, dadurch gekennzeichnet, daß das Gebläse (17) die Atmosphäre im wesentlichen senkrecht von oben nach unten fördert bzw. der Gebläsekanal im wesentlichen vertikal verläuft und gegebenenfalls im Bodenbereich eine auf das Gut gerichtete Umlenkung (24') besitzt.

16. Kühlbehälter nach einem der Ansprüche 9 bis 15, dadurch gekennzeichnet, daß der Regeleinrichtung (8) eine Aufzeichnungseinrichtung (29) für alle während des Betriebes vorhandenen Parameter und von außen eingestellten Betriebswerten zugeordnet ist.

17. Kühlbehälter nach einem der Ansprüche 9 bis 16, dadurch gekennzeichnet, daß die Aufzeichnungseinrichtung (29) und/oder die Regeleinrichtung (8) von einem Rechner mit Mikroprozessoren und Datenspeichern gebildet sind.

18. Kühlbehälter nach einem der Ansprüche 9 bis 17, dadurch gekennzeichnet, daß der Vorratsbehälter (4) für flüssigen Stickstoff und das Gebläse (17) im Raum für das Lagergut (2) insbesondere an einer Stirnwand des Kühlbehälters (1) untergebracht und gegebenenfalls mit einem Gitter (28) vom Lagergut (2) getrennt sind.

19. Kühlbehälter nach einem der Ansprüche 9 bis 18, dadurch gekennzeichnet, daß die Regeleinrichtung (8) eine auf einführbare Datenträger, z.B. Lochkarten, Magnetstreifen, bzw. auf telefonische Modems bzw. auf Funkdatenübertragung, od.dgl., ansprechende Eingabeeinheit aufweist, welche Datenträger insbesondere das eingelagerte Gut, die Lagerungsdauer, die Atmosphärenzusammensetzung, die Temperatur, den Druck u.s.w., betreffende Daten enthalten.

20. Kühlbehälter nach einem der Ansprüche 9 bis 19, dadurch gekennzeichnet, daß die Regeleinrichtung (8) zur Feststellung von Eingriffen in das Programm einen auf ihre Speichereinheit einwirkenden Schlüsselschalter umfaßt.

21. Kühlbehälter nach einem der Ansprüche 9 bis 20, dadurch gekennzeichnet, daß die Aufzeichnungseinrichtung (29) einen Speicher für die während der Lagerung herrschenden bzw. eingeregelten Betriebsparameter, z.B. Atmospährenzusammensetzung, Außen- und Innentemperatur, Druck, Luftfeuchtigkeit u.s.w., aufweist, die gegebenenfalls nur nach Eingabe eines Codes auslesbar sind.

22. Kühlbehälter nach einem der Ansprüche 9 bis 21, dadurch gekennzeichnet, daß alle betätigbaren Einrichtungen, insbesondere auch die händisch betätigbaren Ventile, Regler und Stelleinrichtungen u.s.w., mit Sensoren ausgerüstet sind, und daß bei deren händischer Betätigung die Art und der Zeitpunkt der Betätigung der Aufzeichnungseinrichtung (29) zur Speicherung übermittelt wird.

23. Kühlbehälter nach einem der Ansprüche 9 bis 22, dadurch gekennzeichnet, daß eine den Zutritt zur Regeleinrichtung (8) und/oder Aufzeichnungseinrichtung (29) und gegebenenfalls allen weiteren betätigbaren Einrichtungen verhindernde Verschlußeinrichtung, z.B. eine Tür, ein Deckel u.s.w., vorgesehen ist, deren Öffnung von der Aufzeichnungseinrichtung überwachbar und vorteilhafterweise registrierbar ist.

24. Kühlbehälter nach einem der Ansprüche 9 - 23, dadurch gekennzeichnet, daß die Regeleinrichtung (8) eine Temperaturerhöhungsschaltung umfaßt, mit der eine bestimmte Zeitdauer vor dem Ende der Einlagerung eine Temperaturerhöhung im Lagerraum einregelbar ist, deren Endwert der nach Öffnung des Kühlbehälters zu erwartenden Umgebungsgemperatur entspricht.

25. Kühlbehälter nach einem der Ansprüche 9 - 24, dadurch gekennzeichnet, daß der zur Kühlung eingesetzte flüssige Stickstoff (flüssige Luft) durch flüssiges $CO_2$ zur Gänze oder teilweise ersetzt ist oder daß kalter (flüssiger) $N_2$ gemeinsam mit kaltem (flüssigem) $CO_2$ zur Kühlung in den Behälter (1) eingespeist wird.

Fig. 1